# EUROPEAN PATENT SPECIFICATION

(11) **EP 3 202 553 B1**
(45) Date of publication and mention of the grant of the patent: **23.10.2019**
(21) Application number: 16153830.1
(22) Date of filing: 02.02.2016
(51) Int. Cl.: B29C 63/00, H02G 1/12

(54) **AN APPARATUS FOR STRIPPING A POLYMERIC OUTER CLADDING**
VORRICHTUNG ZUM ABZIEHEN EINER POLYMERAUSSENUMHÜLLUNG
APPAREIL POUR LE DÉCAPAGE D'UN GAINAGE EXTERNE POLYMÈRE

(43) Date of publication of application: 09.08.2017
(73) Proprietor: P.K. Jeppesen & Søn A/S, 4700 Næstved (DK)
(72) Inventor: RASMUSSEN, Anders Moestrup, 4000 Roskilde (DK)
(74) Representative: COPA Copenhagen Patents

(56) References cited:
- WO-A1-95/32535
- WO-A2-2010/061303
- US-A1- 2005 050 713

## Description

### FIELD OF THE INVENTION

The present invention relates to elongated objects, such as cables, insulated heating pipes for district heating, oil pipes, such as flexible pipes etc., comprising a central core and a polymeric cladding or sheath being provided around the core, such as by extrusion around the core. Optionally, the cladding can additionally comprise additional layers, such as a layer of metal foil and an outer sheath.

When producing such elongated objects, a start-up length and a shut-down length of the cladding of the elongated objects are frequently of a poor or insufficient quality and must be separated from the rest of the produced object and sold as scrap or reused.

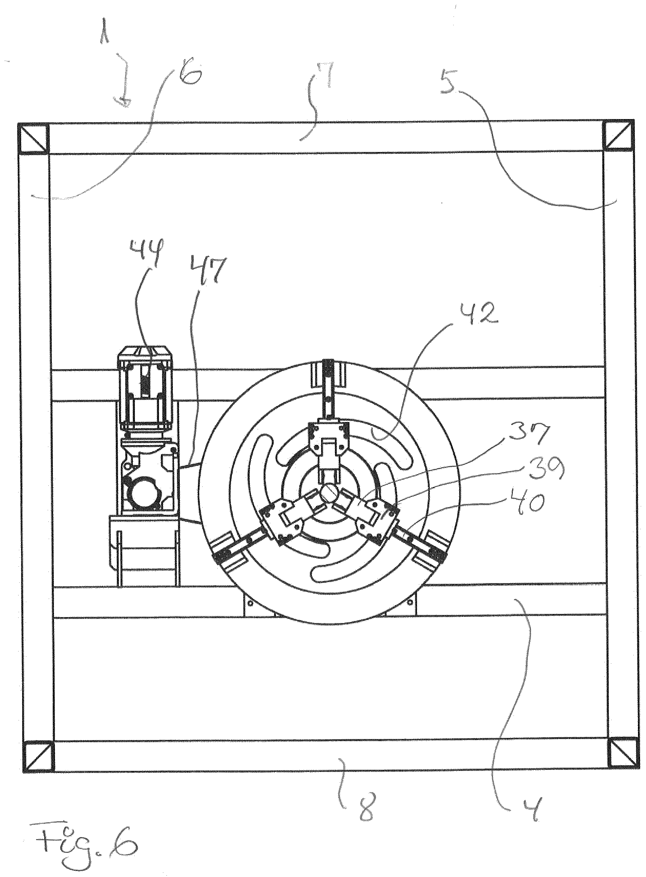

WO 95/32535 A1 discloses as shown in Fig.1 a stripping device for stripping the cladding of electrical cables and comprising:
- a frame having an inlet end and an opposite outlet end,
- a centering device shown in details in Fig. 6 and being configured for centering the cable by engaging the outer surface of the cladding of the cable,
- a cutting device arranged downstream of the centering device as seen in the direction from the inlet end towards the outlet end of the frame. The cutting device comprises a rotary ring arranged rotatably around a central axis of rotation. Two cutting knives are arranged on the rotary table, one of the knives being a radial knive arranged for cutting radially into the cladding, the other knive being an axial knive arranged for cutting longitudinally into the cladding. When a section of the cladding have been cut both radially and longitudinally it can be removed from the core of the cable.

US 2005/050713 A1 discloses a cable stripping apparatus having a centering device for centering the cable by engaging the outer surface of the cladding of the cable, and a cutting device comprising knives for cutting the cladding. The centering device is arranged upstreams of the cutting device as seen in the the direction from an inlet end towards an outlet end of the apparatus.

### SUMMARY OF THE INVENTION

More specifically, the present invention relates to an apparatus according to claim 1 for removing or stripping an especially polymeric cladding or sheath of elongated objects comprising a core, and a polymeric cladding around said core. By removing the cladding from the core and thereby separating the cladding material from the core material, it is possible to dispose separately of the cladding material and the core material. Such a disposal is more environmentally friendly and makes it possible to obtain a higher price for the scrap than by selling said materials as mixed scrap. Additionally, and probably more important, the core can, at least in certain situations, be reused. This is especially the case when producing low, medium or high voltage cables having a cladding comprising a polymeric insulation, such as an insulation of cross-linked polyethylene (XLPE), as will be explained below. It should be noted that in addition to the extruded polymeric layer(s), the cladding may also comprise a metal foil layer arranged outwardly of or on the extruded layer(s) and an outer polymeric sheath arranged outwardly of or on said metallic foil layer.

The present disclosure additionally relates to the use of an apparatus according to the invention in connection with an extruder for extruding a polymeric cladding onto a core of an elongated object, especially extruding a cladding comprising a polymeric insulation around a conductor of a voltage cable; a system comprising an apparatus according to the invention and an extruder for extruding a polymeric cladding onto a core of an elongated object, especially extruding a cladding comprising a polymeric insulation around a conductor of a voltage cable; and a method of extruding a cladding around an elongated core, especially extruding a cladding comprising a polymeric insulation around a conductor of a voltage cable and wherein a start-up and/or a shut-down length of the cladding of the produced cable is stripped from the core and the stripped core is separated from the rest of the produced cable and connected to the forward end of a further core with essentially the same diameter and on which a cladding is extruded.

An apparatus for stripping an especially polymeric outer cladding on a central essentially circular core of an elongated object, such as a polymeric cladding optionally including an insulation extruded around a central conductor of a voltage cable, the central core having a centre line and an outer surface, comprises:
- a frame having an object inlet end and a opposite outlet end, and
- as seen in a direction from the object inlet end towards the outlet end, a cutting device configured for stripping the cladding from the core, and a centering device configured for centering the elongated object,
- the cutting device comprising a table being rotatable around a central rotational axis extending between the object inlet end and the outlet end and being provided with a central opening allowing the elongated object to pass through and being provided with at least one cutting tool configured for stripping the cladding by cutting, the at least one, alternatively each, cutting tool (31) of the cutting device (12) being a milling tool, such as a cylindrical cutter or an end mill, and
- the centering device comprising at least one centering element being configured to engage the outer surface of the core by means of an engagement surface of said centering element and centering the centre line of the core and thereby the elongated object to coincide with the central rotational axis of the cutting device.

As the centering element or elements of the centering device centre the centre line of the core of the elongated object to coincide with the rotational axis of the cutting device, the centre line of the core of the elongated object is always arranged on exactly the same position relative to the rotational axis of the cutting device and the tool(s) thereof. Thereby, the cutting tool(s) of the cutting device can be preset or adjusted to a preselected cutting depth in the cladding and remove the cladding exactly up to the outer surface of the core. As a result, a clean core essentially free from any debris of cladding can be provided. Additionally, the centering device can be configured to monitor the diameter of the core, and the cutting device can be configured to adjust or control the cutting depth, i.e. the position of the cutting tool(s) in dependency of the diameter monitored by the centering device, e.g. by means of control means or control system.

As mentioned, the elongated object can be a voltage cable, such as a low voltage cable, a medium voltage cable or a high voltage cable comprising a core in the form of a conductor and a cladding comprising a polymeric insulation layer around the conductor. Additionally, the cladding may comprise a semiconductor polymeric layer between the conductor and the insulation layer, and an outer semiconductor layer outwardly of or on the insulation layer. Further, the cladding may comprise a metal foil layer arranged outwardly of or on the outer semiconductor layer and an outer polymeric sheath arranged outwardly of or on the metallic foil layer. In principle, the apparatus can also be used to remove one or more outer layers of the elongated object, such as the metal foil layer and the outer polymeric sheath of a voltage cable. Thereby, the subjacent layer can serve as the core layer during the stripping of the metal foil layer and the sheath.

The conductor of a voltage cable is typically of a highly or relatively highly conductive material, such as copper or aluminium or alloys thereof.

The insulation of the cable can as mentioned be a layer of cross-linked polyethylene, XLPE, which is often the case for medium and high voltage cables. However, the insulation can also be of another polymeric material such as PVC, especially for low voltage cables.

The scrap length is during the start-up of the production of voltage cables having a cladding comprising XLPE typically a couple of hundred meters and can in worst case be up to 500 meters. The scrap length of the cables during shut down of the production is typically shorter than the scrap length during start-up.

The highly conductive and expensive material, such as cobber or aluminium or alloys thereof, of the conductor of a voltage cable can have a diameter of 60mm or more. As it will be possible to obtain a considerable higher price for clean metal scrap than for mixed scrap of metal and polymer, large savings can be obtained by selling the conductor and the cladding separately. Further, considerable higher savings can be obtained by reusing the clean conductor a number of times, such at 3 to 10 times or more.

As an example, calculations have shown that great yearly savings can be obtained using a high voltage continuous vulcanization (HV CV) production line producing 110 kV high voltage having a Cu-conductor with a cross- sectional area of 1000 mm² for 50 days a year, and producing 400 kV High voltage cables having an Al-conductor with a cross-sectional area of 1600 mm² for 250 days a year, and 300 m start-up and 100 m shut-down length, and reusing said lengths four times.

According to an embodiment of the invention, the cutting device comprises at least one cutting tool being arranged radially moveable and adjustable relative to the table. One or more cutting tools are needed depending of the radial thickness of the cladding layer and also depending of the machinability of the polymeric material of the cladding and additionally depending of the selected rotational speed of the rotatable table.

According to a preferred embodiment of the present invention, the cutting device comprises at least two cutting tools arranged in essentially a common plane extending perpendicularly to the central axis of rotation of the cutting device, such as a pair of oppositely arranged cutting tools or three cutting tools arranged circumferentially equally spaced.

At present, two oppositely arranged cutting tools in each essentially plane is considered most appropriate.

According to a further embodiment, the cutting device comprises a number of consecutively arranged cutting tools, such as two or three consecutively arranged cutting tools.

Thereby, it is possible to remove relatively thick cladding layers even when the machinability of the cladding material is relatively low

In an additional embodiment of the apparatus, the cutting device comprises at least two cutting tools arranged in essentially a common plane in each of at least two, such as three consecutive arranged planes extending perpendicularly to the central axis of the central axis of rotation of the cutting device.

At present, two oppositely arranged cutting tools in each of three consecutively arranged planes are considered an advantageous embodiment especially when trimming the polymeric cladding of a medium or high voltage cable comprising a core on which an XLPE is extruded and vulcanized. As seen from the inlet towards the outlet end of the apparatus, the tools are preferably as follows; two oppositely arranged cutting tools carrying out a rough machining of the cladding, two oppositely arranged cutting tools carrying out a medium machining, and two oppositely arranged cutting tools carrying out a fine machining of the cladding up to the surface of the conductor.

According to an, at present, preferred embodiment, at least one and preferably each cutting tool of the cutting device is arranged on a slide guided on a radially extending guide way.

At least one cutting tool of the cutting device can be a turning tool.

Each cutting tool of the cutting device is preferably configured to be radially movable between a cutting position in cutting engagement with the cladding of the elongated object and an inactive position in which the elongated object, still being provided with the cladding, can pass through the cutting device without interfering with the cutting device and vice versa.

Alternative to the above-described arrangement of cutting tools, the cutting tools, such as end mills, can be arranged such that the shafts thereof extend essentially radially to the rotational axis of the rotatable table and with a mutual spacing seen in the direction from the front end towards the outlet end of the frame.

As seen in said direction, the cutting device can comprise a single rough milling tool or a first and a second mutually spaced rough milling tool, i.e. milling tools for rough milling.

As seen in said direction and consecutive to the above single rough milling tool or the second rough milling tool and spaced therefrom, the cutting device can comprise a single medium milling tool or a first and a second mutually spaced medium milling tool, i.e. milling tools for medium milling.

As seen in said direction and consecutive to the above single medium milling tool or the second medium milling tool and spaced therefrom, the cutting device can comprise a single fine milling tool or a first and a second mutually spaced fine milling tool, i.e. milling tools for fine milling.

The spacing between consecutive milling tools, such as end mills, can advantageously essentially correspond to the diameter of the end mill.

Further, according to an embodiment of the apparatus, the centering device comprises at least one radially moveable and adjustable centering element.

According to an at present preferred embodiment, the centering device comprises a number of circumferentially mutually equally spaced and in radial direction moveable and adjustable centering elements, such as two radially oppositely arranged centering elements or three radially 120° circumferentially mutually spaced centering elements, preferably arranged in a common plane perpendicular to the central rotational axis of the machining/cutting device.

When using two and especially three 120° circumferentially spaced centering elements, an exact centering of the core is readily obtainable in much the same way as a three-jaw chuck can provide an exact centering of an object having a circular outer surface.

According to an additional embodiment, the centering elements are arranged on respective slides arranged on respective radially extending slide ways.

According to an, at present, preferred embodiment, the centering device is provided with means for synchronously radially moving and adjusting the radial position of the centering elements.

The synchronously radial moving and adjustment of the centering elements can be provided by mechanical means in a manner similar to that of a chuck, such as for a three-jaw chuck, or it can be provided by electronic control means, optionally in combination with one or more sensors, or it can be a combination of mechanical means and electronic control means, optionally in combination with one or more sensors.

According to an embodiment, the synchronous means comprises a rotatable guide plate arranged rotatable around an axis coinciding with the central rotational axis of the cutting device and being provided with a number of mutually equally spaced spiral-shaped guide ways, such as grooves or openings, extending spirally outwardly relative to the central rotational axis and on each slide a mating member cooperating slideably with the respective guide way, such as a protruding member or pin extending into the respective groove or opening.

Alternatively, the guide plate could be provided with a number of mutually equally spaced spiral-shaped guide tracks extending spirally outwardly relative to the central rotational axis and on each slide a track follower received on the respective track.

According to a further embodiment, at least one, alternatively each centering element is provided with a roller rotatable about an axis being perpendicular to the radial direction in which the centering element is radially moveable, said roller having and outer roller face forming the engagement surface of the centering element.

The engagement surface of the roller can be a convex curve as seen in an axial sectional view of the roller.

According to an advantageous embodiment, the centering device is configured to move each centering element between an engagement position engaging the core of the elongated object, such as a conductor of a voltage cable, and an inactive position where the engagement surface of each centering element allows the elongated object, still being provided with the cladding, such as a voltage cable including the cladding thereof, to pass freely through the centering device and vice versa.

Moving the centering elements away from the engagement position and into the inactive position is especially important in order to allow the elongated object to pass freely through in case the cladding has not been removed by the cutting device for some reason, e.g. if the cutting tools of the cutting device have been moved to the inactive position thereof.

It should be noted that the apparatus according to the invention may additionally comprise an advance or feed device for moving, i.e. pushing and/or pulling the elongated object through the cutting device and centering the device of the apparatus. However, the elongated object can also be pushed and/or pulled through the apparatus by means of a separate advance or feed device or by an apparatus to which the apparatus according to the invention is associated or connected.

Additionally, the present invention relates to a system comprising an apparatus according to the invention and an extruder configured to extrude a polymeric cladding around a core of an elongated object, such as an insulation around a central conductor of a high voltage cable, the apparatus being optionally arranged downstream of an outlet end of the extruder where the oblong object, such as the voltage cable, leaves the extruder at a predetermined extrusion velocity and enters the apparatus at the inlet end thereof.

The insulation of the mentioned voltage cable can comprise at least one layer of cross-linked polyethylene (XLPE).

The apparatus is preferably and advantageously configured to rotate the table of the cutting device in dependency of the velocity of which the cable is extruded.

Further, the present invention relates to the use of an apparatus according to the invention in connection with an extruder configured to extrude a polymeric cladding around a central core of an elongated object, such as an insulation around a conductor of a high voltage cable, the apparatus being optionally arranged downstream of an outlet end of the extruder where the elongated object, such as the voltage cable leaves the extruder at a predetermined extrusion velocity and enters the apparatus at the inlet end thereof.

The insulation of the mentioned voltage cable can comprise at least one layer of cross-linked polyethylene (XLPE).

The apparatus is preferably and advantageously configured to rotate the table of the cutting device in dependency of the velocity of which the cable is extruded. In general, the apparatus according to the invention can be configured to rotate the table of the cutting device in dependency of the speed at which the elongated device to be stripped is advanced through the device.

Finally, the present invention relates to a method of producing elongated objects comprising a central core and a polymeric cladding extruded around the core, said method comprising the following steps:
a) moving a first core through an extruder and extruding the polymeric cladding around the core and thereby producing a first elongated object
b) stripping a start-up length of the cladding having insufficient quality and thereby providing a clean length of the first core by using an apparatus (1) according to any of the claims 1-13
c) separating the clean length of the first core from the produced first oblong object having cladding extruded around the core
d) connecting the separated clean length of the first core to a forward end of a second core having the same outer diameter as the first core, such as by welding or soldering, whereby the clean length forms a forward portion on the second core.
e) moving the second core through an extruder and extruding a polymeric cladding around the core and thereby producing a second oblong object on which a start-up length of the cladding having insufficient quality is extruded around at least a part of the clean length of the first core.

The oblong object can be a voltage cable, such as a low, medium or high voltage cable, whereby the core is a conductor and the cladding comprises a polymeric insulation. The polymeric insulation can comprise a layer of cross-linked polyethylene (XLPE) being extruded and vulcanized around the conductor.

Thus, the method can be a method of producing voltage cables comprising a central conductor and a polymeric cladding extruded around the central conductor, said cladding comprising a polymeric insulation, said method comprising the following steps:
a) moving a first conductor through an extruder and extruding and optionally vulcanizing a polymeric cladding comprising polymeric insulation around the conductor and thereby producing a first voltage cable,
b) stripping a start-up length of polymeric cladding having insufficient quality and thereby providing a clean length of the first conductor,
c) separating the clean length of the first conductor from the produced first cable having cladding extruded around the conductor,
d) connecting the separated clean length of the first conductor to a forward end of a second conductor, such as by welding or soldering, whereby the clean length forms a forward portion on the second conductor,
e) moving the second conductor through an extruder and extruding and optionally vulcanizing a polymeric cladding comprising a polymeric insulation around the conductor and thereby producing a second voltage cable on which a start- up length of the insulation having insufficient quality is extruded and optionally vulcanized around at least a part of the clean length of the first conductor.

When the cladding comprises an insulation comprising a layer of cross-linked polyethylene (XLPE) the cladding is vulcanized in connection with the extrusion.

### BRIEF DESCRIPTION OF THE FIGURES

Embodiments of the invention will be described in more detail in the following with regard to the accompanying figures. The figures show one way of implementing the present invention and are not to be construed as being limiting to other possible embodiments falling within the scope of the attached claim set.
Fig. 1 shows a perspective view of an embodiment of an apparatus according to the invention,
Fig. 2 shows a top view of the apparatus shown in Fig. 1,
Fig. 3 shows a vertical sectional view along the line III-III in Fig. 2,
Fig. 4 shows a longitudinal sectional view through the apparatus along the line IV-IV in Fig. 3,
Fig. 5 shows a perspective view of a milling tool arranged in a milling head of a cutting device of the apparatus according to the invention,
Fig. 6 shows a vertical sectional view along the line VI-VI in Fig. 2 and shows the centering device of the apparatus,
Fig. 7 shows a perspective view of parts of the centering device of the apparatus according to the invention,
Fig. 8 shows a system according to the invention comprising an apparatus according to the invention arranged downstream of an extruder extruding a polymeric cladding around a core, the polymeric cladding being stripped by the apparatus according to the invention, an additionally illustrated method according to the invention for producing elongated objects comprising a core and a polymeric cladding extruded around the core.
Fig. 9 shows diagrammatically a portion of an elongated object in the form of a high voltage cable comprising a conductor a cladding extruded around the conductor

### DETAILED DESCRIPTION OF THE INVENTION

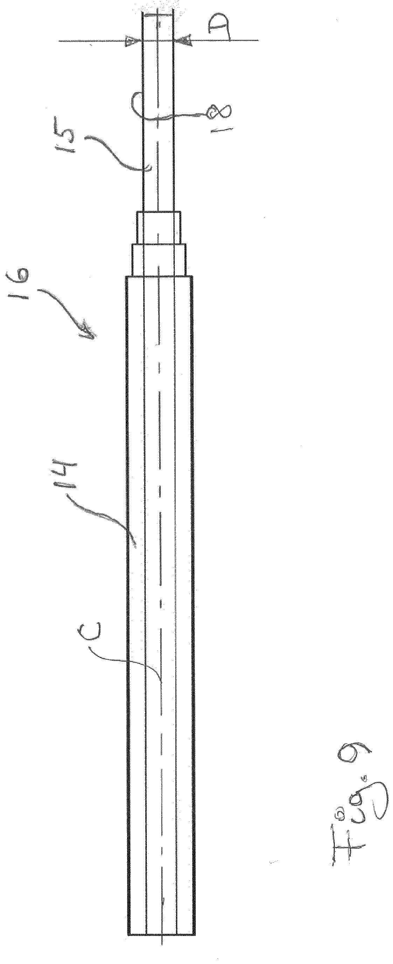

The present invention will be described below with reference to an apparatus 1 for stripping a polymer cladding 14 of an elongated object 16 in the form of a voltage cable comprising a core 15 in the form of a conductor and a cladding extruded around the conductor (see Fig. 9). It should, however, be understood that the invention is not limited to the stripping of cables as it encompasses an apparatus for stripping of elongated objects 16, in general, comprising a core 15 and a cladding 14, such as a polymeric cladding provided around said core 15.

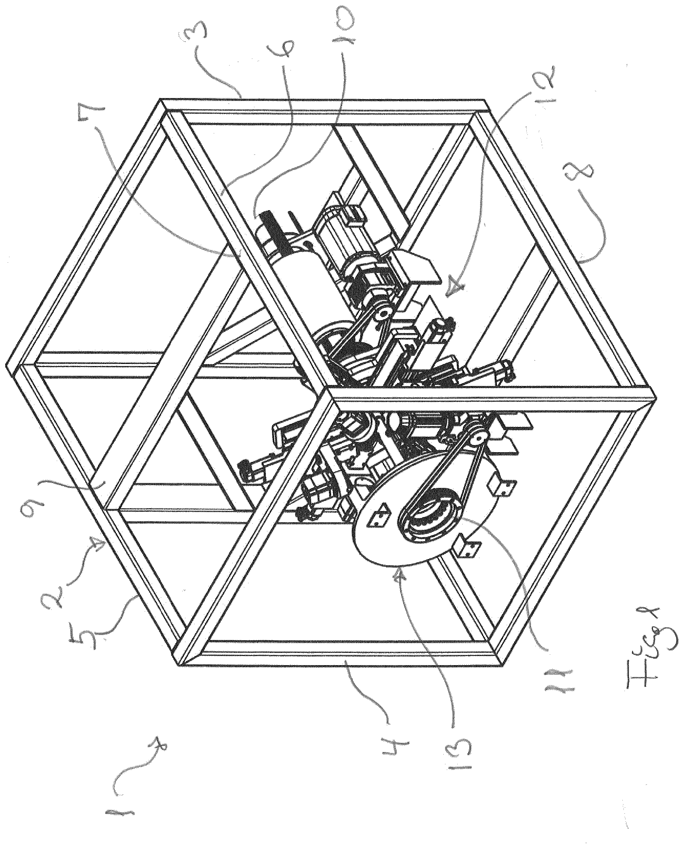

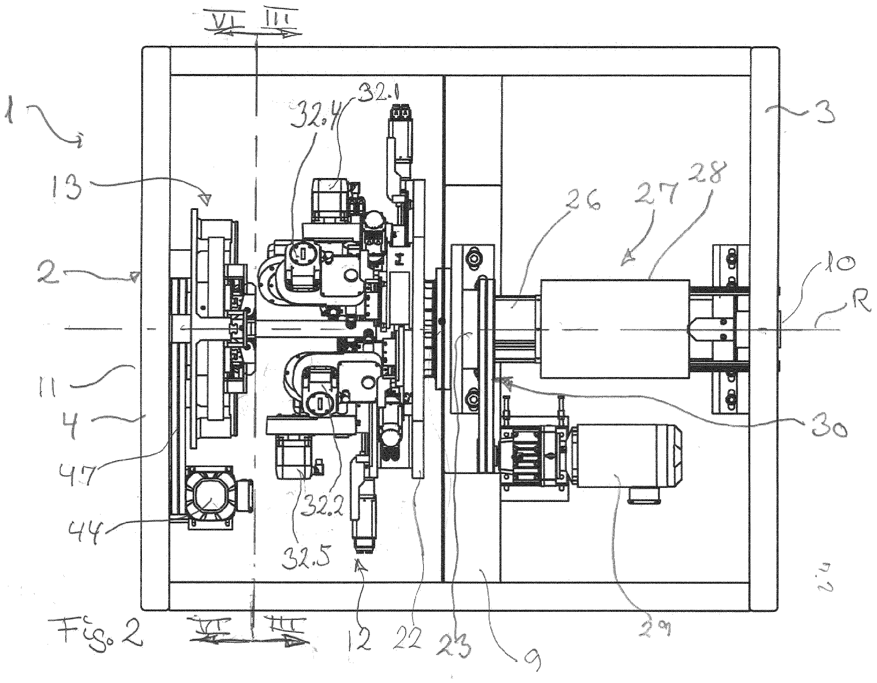

As shown in Figs. 1 to 3 and 6, the apparatus 1 comprises a frame 2 being of a box-shaped lattice structure comprising a front part 3, an opposite rear part 4, a middle part 9 between the front and rear part, opposite right and left side parts 5,6, and opposite top and bottom parts 7,8. The front part forms an object inlet end 10 and the rear part 4 forms an outlet end 11 of the apparatus.

As seen in the direction from the inlet end 10 towards the outlet end 11, the apparatus 1 comprises a cutting device 12 configured for stripping, i.e. removing the cladding 14 from the core 15 of the elongated object 16, and a centering device 13 configured for centering the core 15 of the elongated object 16 and thereby also the elongated object relative to the cutting device 12.

As shown in Figs. 1-5, the cutting device 12 comprises a table 22 being rotatable around a central rotational axis R extending between the object inlet end 10 and outlet end 11 of the frame 2. The table 22 is journaled in a bearing 23 arranged in the middle part 9 of the frame 2 and provided with a central opening 24 allowing the elongated object to pass through. In the embodiment shown, the central opening 24 is formed by or forms a continuation of the bore 25 of an inner hollow rotor 26 of a slip ring 27 comprising a stator 28 surrounding the rotor 26. The stator 28 of the slip ring 27 is connected to the frame, in the present case the front part 3 thereof, and the rotor 26 of the slip ring is connected to the inner ring of the bearing 23, the table being also connected to said inner ring. The outer ring of the bearing 23 is connected to the middle part 9 of frame 2. The table 22 is driven to rotation by means of a motor 29 and a drive 30 being shown as a belt drive.

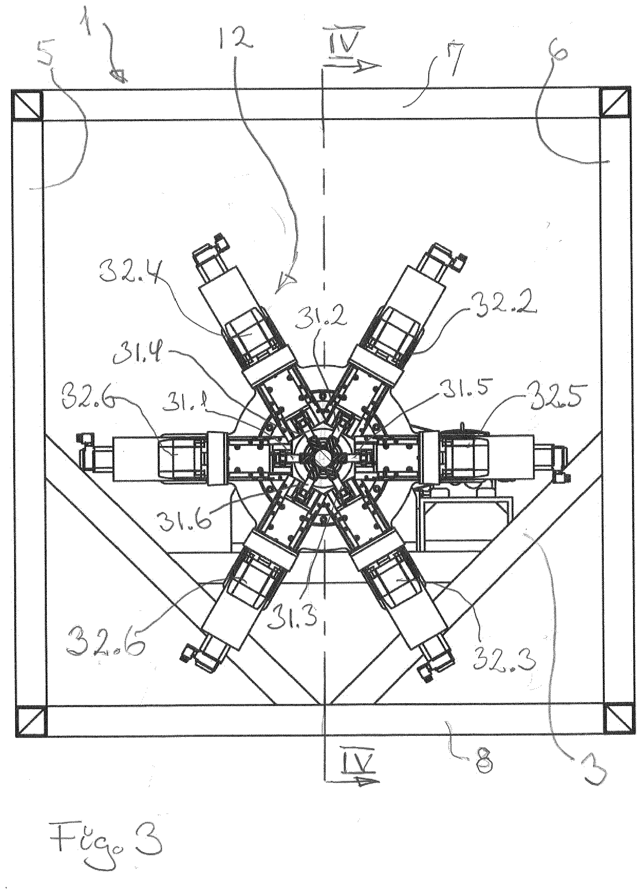

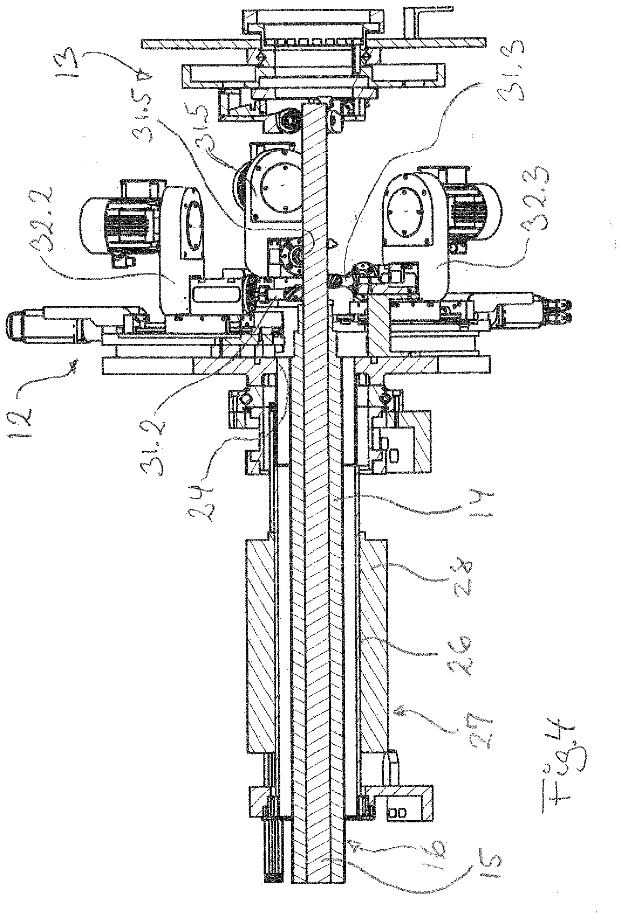

Additionally, the cutting device 12 comprises a number of cutting tools 31 arranged on the table 22. In the embodiment shown, the cutting tools are milling tools in the form of end mills. As most clearly shown in Figs. 3 and 4, the apparatus comprises six milling tools, i.e. end mills 31.1 to 31.6 arranged so that the shafts thereof extend essentially radially to the rotational axis R of the table 22 and with a mutual spacing as seen in the direction from the front end towards the outlet end of the frame 2. As seen in said direction from the front end towards the outlet end of the frame 2, the table 22 comprises a first and a second mutually spaced rough milling tools 31.1, 31.2 for carrying out a rough machining of the cladding 14, thereafter a spacing and a first and second mutually spaced medium milling tools 31.3, 31.4 for carrying out a medium machining of the cladding, and finally a spacing and a first and a second mutually spaced fine milling tools 31.5, 31.6 for carrying out a fine machining of the cladding up to the outer surface 18 of the core 15. The spacing between the consecutive milling tools 31 is advantageously selected corresponding to the diameter d of the milling tools, i.e. end mills. In the embodiment shown, the tools are arranged essentially in pairs of tools comprising two diametrically oppositely arranged tools. A first pair comprises the first rough milling tool 31.1 and first fine milling tool 31.5, the second pair comprises the second rough milling tool 31.2 and the second fine milling tool 31.6, whereas the third pair comprises the first and second medium milling tools 31.3, 31.4.

Alternative to the above arrangement of the milling tools, the milling tools 31 can be arranged in pairs comprising two oppositely arranged tools arranged essentially in line in a common plane extending perpendicular to the central rotational axis R of the table 22, and the table is provided with tree axially spaced and consecutively arranged pairs of milling tools, each pair comprising two oppositely arranged milling tools 31. In the above alternative arrangement, the table comprises a pair of oppositely arranged rough milling tools, a first spacing, a pair of oppositely arranged medium milling tools, a second spacing, and a pair of oppositely arranged fine milling tools as seen in the direction from the front end towards the outlet end of the frame.

The shaft of each milling tool extends essentially radially to the rotational axis of the table 22 and, as seen in the direction from the front end towards the outlet end of the frame 2, a first pair of oppositely arranged milling tools carries out a rough machining of the cladding, a second pair of oppositely arranged milling tools carries out a medium machining of the cladding and a third pair of oppositely arranged milling tools carries out a fine machining of the cladding up to the core.

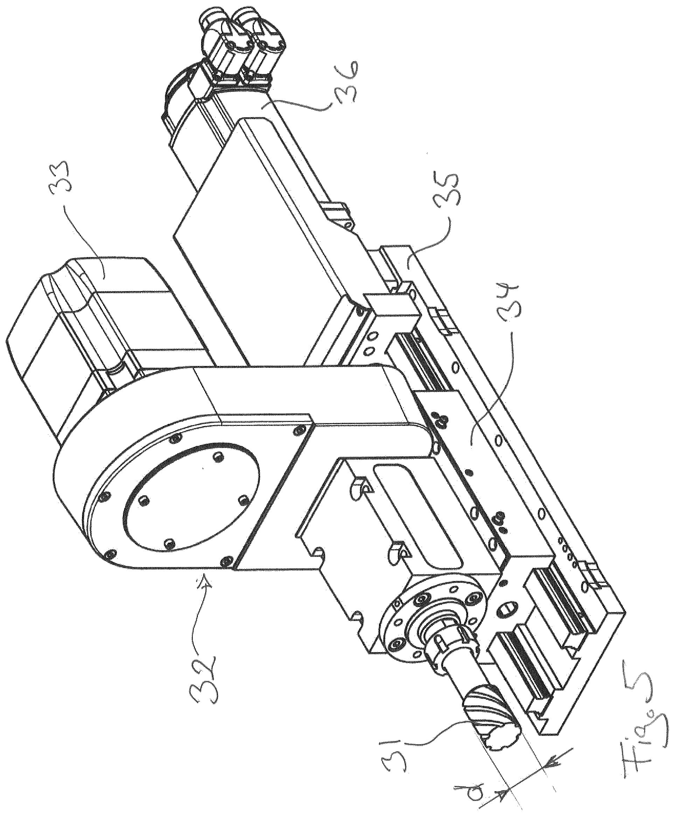

As most clearly shown in Fig.5, each milling tool 31 is arranged in a tool holder of a milling unit 32 being provided with a motor 33 configured to rotate a spindle and thereby the milling tool 31 held by the tool holder at the outer free end of the spindle. Each milling unit 32 is arranged on a slide 34 guided on a radially extending guide way 35 whereby the milling unit 32 together with the slide 34 is radially moveable and adjustable by means of a respective linear actuator 36.

The milling units provided with the rough milling tool 31.1 and 31.2, respectively, are denoted 32.1 and 31.2, respectively, the milling units provided with the medium milling tool 31.3 and 31.4, respectively, are denoted 32.3 and 31.4, respectively, and the milling units provided with the fine milling tool 31.5 and 31.6, respectively, is denoted 32.5 and 31.6, respectively.

In the embodiment shown, the centering device 13 comprises three radially movable and adjustable centering elements 37 configured to engage the outer surface 18 of the core 15 of the elongated object 16 by means of an engagement surface 38 of each element 37 in order to centre the core 15 and thereby the elongated object 16 to coincide with the central rotational axis R of the cutting device 12. The centering elements 37 are arranged in a common plane extending perpendicularly to the central rotational axis R of the cutting device 12 and are mutually equally circumferentially spaced, i.e. 120° mutually spaced. Each centering element 37 is arranged on a slide 39 arranged on a radially extending slide way 40. The slide ways are rigidly connected to the rear part 4 of the frame 2. Additionally, the centering device 13 is provided with synchronous means for synchronously radially moving and adjusting the radial position of the centering elements 37 on the slides 39. In the embodiment disclosed, the synchronous means comprises a rotatable guide plate 41. By means of a bearing having an outer bearing ring being rigidly connected to the rear part 4 of the frame 2, the guide plate is rotatable relative to the frame 2 around an axis coinciding with the central rotational axis R of the cutting device 12. The guide plate 41 is provided with three mutually equally spaced, i.e. 120° circumferentially mutually spaced spiral-shaped guide ways 42 extending spirally outwards relative to the central rotational axis R of the cutting device 12. Each centering element slide 39 is provided with an engagement member 43 slidingly engaging a respective guide way and movable along said guide way. In the embodiment shown, the guide ways 42 are grooves in the guide plate 41, the guide plate being arranged between the rear part 4 of the frame 2 and the radially extending slide ways 40, and the engagement members 42 of the respective centering element slides 39 are a pin extending into a respective groove.

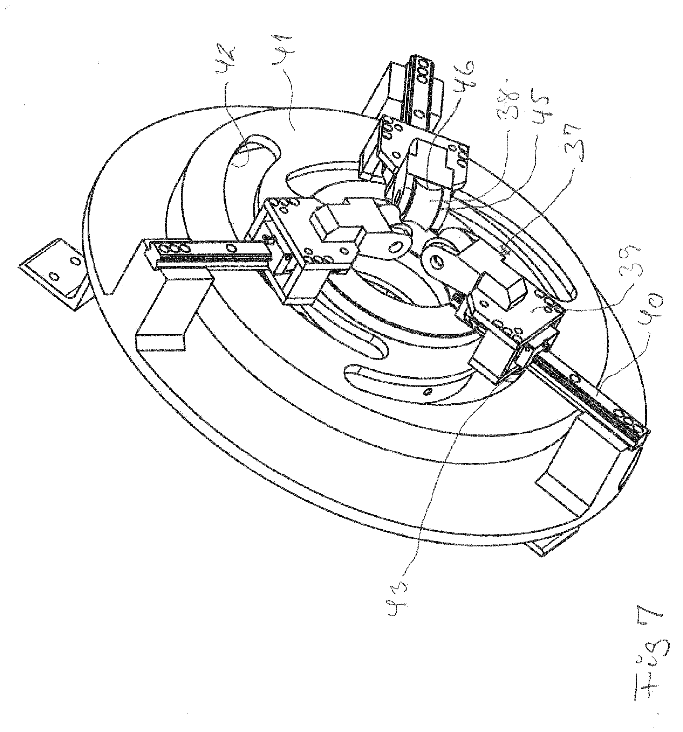

The guide plate 41 is rotatable by means of a motor 44 and a drive 45 shown as a belt drive. When rotating the guide plate 41 in a first direction, the engagement of the pins of the slides in the respective grooves of the guide plate 41 entails a radial movement of the slides 39 on the respective slide ways 40 in an radially inwards direction to bring the engagement surface 38 of the respective centering elements 37 into engagement with the outer surface 18 of the core 15, i.e. into an engagement position, and thereby centre the elongated object 16 on the central rotational axis R of the cutting device. Correspondently, a rotation of the guide plate 41 in a second direction opposite to the first direction entails that the slides 39 and thereby the centering elements 37 are moved radially outwards on the respective slide ways 40 to bring the engagement surfaces 38 out of engagement with the outer surface 18 of the core 15 of the elongated object 16. The centering element slides 39 and thereby the centering elements 37 can be moved into an outer inactive position in which the elongated element 16 can feely pass through the centering device 13. As seen in Fig. 7, each centering element 37 is provided with a roller 45 arranged rotatably about an axis being perpendicular to the radial direction in which the centering element 37 is radially moveable. The roller 45 has an outer roller face 46 forming the engagement surface 38 of the centering element 37 and being convex, in the shown embodiment, as seen in a radial sectional view of the roller 45.

When stripping a given elongated object 16, the cutting tools 31 can be preset or adjusted to a preselected cutting depth in the cladding corresponding to the outer diameter D of the core 15 of the elongated object whereby the cladding is removed up to a diameter corresponding to the preselected cutting depth. Additionally, the centering device 12 can be configured to continuously monitor the diameter D of the core 12 and the cutting device can be configured to adjust or control the cutting depth of the cutting tools 31 into the cladding, i.e. the radial position of the cutting tools, in dependency of the diameter of the core monitored by the centering device 13, e.g. by means of a control means or control system. Further, the diameter D of the core 12 can be monitored by means on sensors connected to the centering elements 37 of the centering device 13 or by means of sensors separated from the centering device, i.e. be parts of a separate diameter monitoring device configured to continuously monitoring the diameter of the core and communicating the monitored diameter to the cutting device 12, whereby the cutting device continuously removes the cladding 14 up to the outer surface of the core 15.

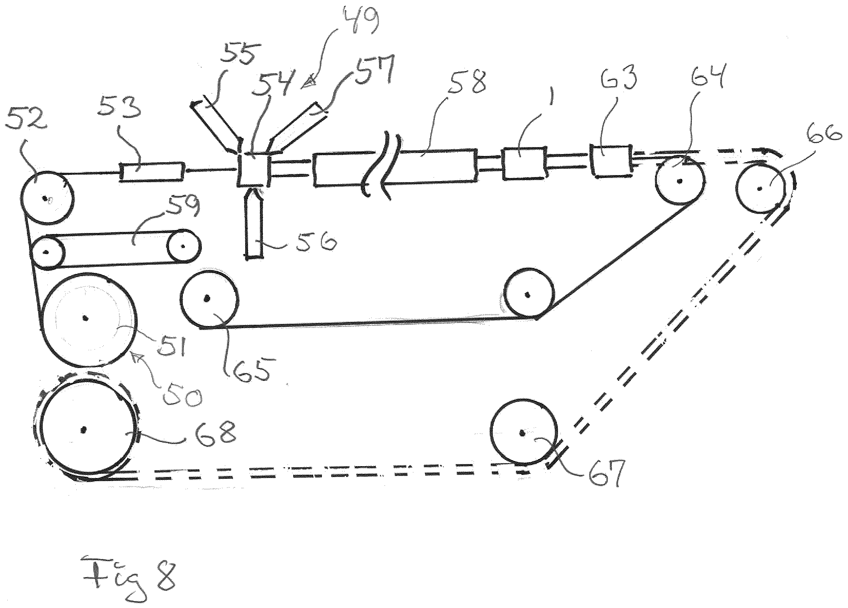

Reference is now made to Fig. 8 diagrammatically disclosing an apparatus according to the invention used in connection with an extruder configured to extrude a polymeric cladding 14 around a core 15 of an elongated object 16 and a system comprising an apparatus according to the invention and an extruder configured to extrude a polymeric cladding around a core of an elongated object, such as an insulator comprising a layer 61 of XLPE and two layers of a polymeric semiconductor 60,62 around the conductor of a high voltage cable, the apparatus being arranged downstream of the extruder where the cable leaves the extruder. Additionally, Fig. 8 illustrates a method according to the invention for producing elongated objects 16 comprising a central core 15 and a polymeric cladding 14 extruded around the central core, the method being illustrated by means of the production of a high voltage cable comprising a core 15 in the form of a central conductor and a polymeric cladding 14 comprising an insulation layer of XLPE extruded around the central conductor.

The shown system comprises a conductor pay-off reel 50 with a coil 51 of the conductor 15. From the pay-off reel 50, the conductor is moved through a conductor accumulator 59, around a wheel 52, also named a capstan, and into a preheater 53 preheating the conductor 15 before it enters a triple head extrusion machine 49 extruding a polymeric cladding 14 around the conductor 15. The triple head extrusion machine 49 comprises a triple extension head 54, a first extruder 55 extruding through the head 54 a first semiconductor layer 60 around the conductor, a second extruder 56 extruding through the head 54 an insulation layer 61 around the first semiconductor layer 60 and a third extruder 57 extruding through the head 54 a second semiconductor layer 62 around the insulation layer 61. From the triple head extrusion machine 49, the conductor provided with the insulation layer and the semiconductor layers is moved into a processing and conditioning device 58 in which the XLPE layer is vulcanized and cooled to form the high voltage cable 16. From the processing and conditioning device 58, the cable 15 is moved into the stripping apparatus 1 according to the invention to remove from the conductor the initial length or start-up length of the cladding 14 that is of insufficient quality. The conductor 15 freed from the cladding 14 leaves the apparatus 1 via a draw device 63, such as a caterpillar or draw rollers, and passes around a conductor return wheel 64.

From the wheel 64, the conductor freed from cladding 14 can be moved to and winded up on a conductor take-up reel 65. The conductor 15 freed from cladding 14 can, at a later point in time, be connected to the front end of a coil of conductor and thereby form the initial or start-up length of said conductor during a extrusion process where a cladding is extruded around the conductor. Thereby, the length of the conductor, from which the cladding from a previous extrusion process has been removed, forms the start-up length on which cladding of insufficient quality is formed during the extrusion process. The above procedure can be repeated a number of times, such as 4-10 times, using the same length of the conductor freed from cladding each time.

The removal of cladding of insufficient quality from the conductor is stopped when the cladding is of the desired quality and the conductor-length freed from the cladding is severed from the conductor provided with cladding of the desired quality adjacent the outlet end of the apparatus 1. After the conductor length freed from cladding 14 has been removed from the cable, the cable with cladding of the desired quality is moved via return wheels 66 and 67 to and winded up on a cable take-up reel 68. As described above, the same length of conductor freed from cladding can be reused several times and serve as the start length of a conductor on which the extruded cladding is of insufficient quality and is removed by the apparatus according to the invention and the corresponding conductor start length reused.

### LIST OF REFERENCE NUMERALS

- 1.: apparatus
- 2.: frame
- 3.: front part
- 4.: rear part
- 5.: right side part
- 6.: left side part
- 7.: top part
- 8.: bottom part
- 9.: middle part
- 10.: object inlet end
- 11.: outlet end
- 12.: cutting device
- 13.: centering device
- 14.: cladding
- 15.: core/conductor
- 16.: elongated object
- 17.: centre line
- 18.: outer surface
- 19.:
- 20.:
- 21.:
- R: rotational axis
- 22.: table
- 23.: bearing
- 24.: central opening of table
- 25.: bore of inner hollow rotor
- 26.: inner hollow rotor
- 27.: slip ring
- 28.: outer stator
- 29.: motor
- 30.: drive
- 31.: cutting tool/milling tool
- 31.1: first rough milling tool
- 31.2: second rough milling tool
- 31.3: first medium milling tool
- 31.4: second medium milling tool
- 31.5: first fine milling tool
- 31.6: second fine milling tool
- 32.: milling unit
- 32.1: milling unit with first rough milling tool
- 32.2: milling unit with second rough milling tool
- 32.3: milling unit with first medium milling tool
- 32.4: milling unit with second medium milling tool
- 32.5: milling unit with first fine milling tool
- 32.6: milling unit with second fine milling tool
- 33.: motor of milling unit
- 34.: milling unit slide
- 35.: milling unit slide way
- 36.: linear actuator
- 37.: centering elements
- 38.: engagement surface
- 39.: centering element slide
- 40.: radially extending centering element slide way
- 41.: guide plate
- 42.: spiral shaped guide ways
- 43.: engagement member
- 44.: motor drive
- 45.: roller
- 46.: roller face
- 47.:
- 48.:
- 49.: triple head extrusion machine
- 50.: pay-off reel
- 51.: conductor coil
- 52.: wheel
- 53.: preheater
- 54.: extruder
- 55.: first extruder
- 56.: second extruder
- 57.: third extruder
- 58.: processing and conditioning device
- 59.: conductor accumulator
- 60.: first semiconductor layer
- 61.: insulation layer
- 62.: second semiconductor layer
- 63.: draw device/caterpillar
- 64.: conductor return wheel
- 65.: conductor take-up reel
- 66.: cable return wheel
- 67.: cable return wheel
- 68.: cable take-up reel
- D.: diameter of core/conductor
- d.: diameter of end mill
- c.: centre line of core/conductor

## Claims

1. Apparatus (1) for stripping an essentially polymeric outer cladding (14) on a central essentially circular core (15) of an elongated object (16), such as a polymeric cladding, optionally including an insulation, extruded around a central conductor of a voltage cable, the central core (15) having a centre line (17) and an outer surface (18), the apparatus comprising
- a frame (2) having an object inlet end (10) and a opposite outlet end (11), and as seen in a direction from the cable inlet end towards the outlet end, a cutting device (12) configured for stripping the cladding (14) from the core (15) and a centering device (13) configured for centering the elongated object (16),
the cutting device (12) comprising a table (22) being rotatable around a central rotational axis (R) extending between the object inlet end (10) and the outlet end (11) and being provided with a central opening (24) allowing the elongated object to pass through there and being provided with at least one cutting tool (31) configured for stripping the cladding (14) by cutting, the at least one, alternatively each, cutting tool (31) of the cutting device (12) being a milling tool, such as a cylindrical cutter or an end mill,
- the centering device (13) comprising at least one centering element (37) being configured to engage the outer surface (18) of the core (15) by means of an engagement surface (38) of said centering element (37) and centering the centre line (17) of the core (15) and thereby the elongated object (16) to coincide with the central rotational axis (R) of the cutting device (12).

2. Apparatus according to claim 1, wherein the cutting device (12) comprises at least one cutting tool (31) being arranged radially moveable and adjustable relative to the table (22).

3. Apparatus according to any of the preceding claims, wherein the cutting device (12) comprises at least two cutting tools (31) arranged in essentially a common plane extending perpendicularly to the central axis of rotation (R) of the cutting device (12), such as a pair of oppositely arranged cutting tools (31) or three cutting tools arranged circumferentially equally spaced.

4. Apparatus according to any of the preceding claims, wherein the cutting device (12) comprises a number of consecutively arranged cutting tools (31), such as two or three consecutively arranged cutting tools.

5. Apparatus according to any of the preceding claims, wherein the cutting device (12) comprises at least two cutting tools (31) arranged in essentially a common plane in each of at least two, such as three, consecutive arranged planes extending perpendicularly to the central axis of rotation (R) of the cutting device (12).

6. Apparatus according to any of the preceding claims, wherein at least one and preferably each cutting tool (31) of the cutting device (12) is arranged on a slide (34) guided on a radially extending guide way (35).

7. Apparatus according to any of the preceding claims, wherein the centering device (13) comprises at least one radially moveable and adjustable centering element (37).

8. Apparatus according to any of the preceding claims, wherein the centering device (13) comprises a number of circumferentially mutually equally spaced and in radial direction moveable and adjustable centering elements (37), such as two radially oppositely arranged centering elements or three radially 120° circumferentially mutually spaced centering elements (37) preferably being arranged in a common plane perpendicular to the central rotational axis (R) of the machining/cutting device (12).

9. Apparatus according to claim 7 or 8, wherein the centering elements (37) are arranged on respective slides (39) arranged on respective radially extending slide ways (40).

10. Apparatus according to any of the preceding claims 7-9, wherein the centering device (13) is provided with means for synchronously radially moving and adjusting the radial position of the centering elements (37).

11. Apparatus according to claim 10, wherein the synchronous means comprises a rotatable guide plate (41) arranged rotatably around an axis coinciding with the central rotational axis (R) of the cutting device (12) and being provided with a number of mutually equally spaced spiral-shaped guide ways (42), such as grooves or openings, extending spirally outwardly relative to the central rotational axis (R) and on each slide a mating member sliding cooperating with the respective guide way (42), such as a protruding member or pin.

12. Apparatus according to any of the preceding claims 7-11, wherein at least one, alternatively each, centering element (37) is provided with a roller (45) rotatable about an axis being perpendicular to the radial direction in which the centering element (37) is radially moveable, said roller (45) having and outer roller face (46) forming the engagement surface (38) of the centering element (37).

13. Apparatus according to any of the preceding claims 7-12, wherein the centering device (13) is configured to move each centering element (37) between an engagement position engaging the core (15) of the elongated object (16), such as a conductor of a voltage cable and an inactive position where the engagement surface (38) of each centering element (37) allows the elongated object (16), such as a voltage cable, including the cladding (14) thereof to pass freely through the centering device (13).

14. System comprising an apparatus (1) according to any of the preceding claims 1-13 and an extruder (54) configured to extrude a polymeric cladding (14) around a core (15) of an elongated object (16), such as insulation (61) around a central conductor (15) of a high voltage cable, the apparatus (1) being optionally arranged downstream of an outlet end of the extruder (54) where the oblong object (16), such as the voltage cable leaves the extruder at a predetermined extrusion velocity and enters the apparatus (1) at the inlet end (10) thereof.

15. Method of producing elongated objects (16) comprising a central core (15) and a polymeric cladding (14) extruded around the core (15), said method comprising the following steps:
a) moving a first core through an extruder (54) and extruding the polymeric cladding (14) around the core (15) and thereby producing a first elongated object,
b) stripping a start-up length of the cladding (14) having insufficient quality and thereby providing a clean length of the first core by using an apparatus (1) according to any of the preceding claims 1-13,
c) separating the clean length of the first core from the produced first oblong object having cladding extruded around the core,
d) connecting the separated clean length of the first core to a forward end of a second core having the same outer diameter as the first core, such as by welding or soldering, whereby the clean length forms a forward portion on the second core,
e) moving the second core through an extruder and extruding a polymeric cladding around the core and thereby producing a second oblong object on which a start-up length of the cladding having insufficient quality is extruded around at least a part of the clean length of the first core.

## Patentansprüche

1. Einrichtung (1) zum Abziehen einer im Wesentlichen polymeren Außenumhüllung (14) auf einem zentralen, im Wesentlichen kreisförmigen Kern (15) eines länglichen Objekts (16), wie einer Polymerumhüllung, optional enthaltend eine Isolierung, extrudiert um einen zentralen Leiter eines Spannungskabels, wobei der zentrale Kern (15) eine Mittellinie (17) und eine Außenfläche (18) hat, die Einrichtung umfassend:
- einen Rahmen (2) mit einem Objekteinlassende (10) und einem gegenüberliegenden Auslassende (11) und, bei Betrachtung in einer Richtung vom Kabeleinlassende zum Auslassende, einer Schneidevorrichtung (12), die zum Abziehen der Umhüllung (14) vom Kern (15) ausgebildet ist, und einer Zentriervorrichtung (13), die zum Zentrieren des länglichen Objekts (16) ausgebildet ist,
wobei die Schneidevorrichtung (12) einen Tisch (22) umfasst, der um eine zentrale Drehachse (R) drehbar ist, die sich zwischen dem Objekteinlassende (10) und dem Auslassende (11) erstreckt und mit einer zentralen Öffnung (24) bereitgestellt ist, die ein Hindurchgehen des länglichen Objekts erlaubt, und mit mindestens einem Schneidewerkzeug (31) bereitgestellt ist, das zum Abziehen der Umhüllung (14) durch Schneiden ausgebildet ist, wobei das mindestens eine, alternativ jedes, Schneidewerkzeug (31) der Schneidevorrichtung (12) ein Fräswerkzeug ist, wie ein Walzenfräser oder ein Schaftfräser,
- wobei die Zentriervorrichtung (13) mindestens ein Zentrierelement (37) umfasst, das für einen Eingriff mit der Außenfläche (18) des Kerns (15) mit Hilfe einer Eingriffsfläche (38) des Zentrierelements (37) und Zentrieren der Mittellinie (17) des Kerns (15) und dadurch des länglichen Objekts (16) ausgebildet ist, um mit der zentralen Drehachse (R) der Schneidevorrichtung (12) übereinzustimmen.

2. Einrichtung nach Anspruch 1, wobei die Schneidevorrichtung (12) mindestens ein Schneidewerkzeug (31) umfasst, das radial beweglich und relativ zum Tisch (22) einstellbar angeordnet ist.

3. Einrichtung nach einem der vorstehenden Ansprüche, wobei die Schneidevorrichtung (12) mindestens zwei Schneidewerkzeuge (31), die im Wesentlichen in einer gemeinsamen Ebene angeordnet sind, die sich senkrecht zur zentralen Drehachse (R) der Schneidevorrichtung (12) erstreckt, wie ein Paar von gegenüberliegend angeordneten Schneidewerkzeugen (31), oder drei Schneidewerkzeuge, die gleichmäßig um den Umfang beabstandet angeordnet sind, umfasst.

4. Einrichtung nach einem der vorstehenden Ansprüche, wobei die Schneidevorrichtung (12) eine Anzahl aufeinanderfolgend angeordneter Schneidewerkzeuge (31), wie zwei oder drei aufeinanderfolgend angeordnete Schneidewerkzeuge, umfasst.

5. Einrichtung nach einem der vorstehenden Ansprüche, wobei die Schneidevorrichtung (12) mindestens zwei Schneidewerkzeuge (31) umfasst, die im Wesentlichen in einer gemeinsamen Ebene in jeder von mindestens zwei, wie drei, aufeinanderfolgend angeordneten Ebenen angeordnet sind, die sich senkrecht zur zentralen Drehachse (R) der Schneidevorrichtung (12) erstrecken.

6. Einrichtung nach einem der vorstehenden Ansprüche, wobei mindestens ein und vorzugsweise jedes Schneidewerkzeug (31) der Schneidevorrichtung (12) auf einem Schlitten (34) angeordnet ist, der auf einer sich radial erstreckenden Führungsbahn (35) geführt wird.

7. Einrichtung nach einem der vorstehenden Ansprüche, wobei die Zentriervorrichtung (13) mindestens ein radial bewegliches und einstellbares Zentrierelement (37) umfasst.

8. Einrichtung nach einem der vorstehenden Ansprüche, wobei die Zentriervorrichtung (13) eine Anzahl von um den Umfang wechselseitig gleich beabstandeten und in radialer Richtung beweglichen und einstellbaren Zentrierelementen (37) umfasst, wie zwei radial gegenüberliegend angeordnete Zentrierelemente oder drei radial um den Umfang wechselseitig mit 120° beabstandete Zentrierelemente (37), die vorzugsweise in einer gemeinsamen Ebene senkrecht zur zentralen Drehachse (R) der Bearbeitungs-/Schneidevorrichtung (12) angeordnet sind.

9. Einrichtung nach Anspruch 7 oder 8, wobei die Zentrierelemente (37) auf entsprechenden Schlitten (39) angeordnet sind, die auf sich jeweils radial erstreckenden Gleitbahnen (40) angeordnet sind.

10. Einrichtung nach einem der vorstehenden Ansprüche 7-9, wobei die Zentriervorrichtung (13) mit Mitteln zum synchronen radialen Bewegen und Einstellen der radialen Position der Zentrierelemente (37) bereitgestellt ist.

11. Einrichtung nach Anspruch 10, wobei die synchronen Mittel eine drehbare Führungsplatte (41), die um eine Achse drehbar angeordnet ist, die mit der zentralen Drehachse (R) der Schneidevorrichtung (12) übereinstimmt, und mit einer Anzahl gleich beabstandeter, spiralförmiger Führungsbahnen (42) wie Rillen oder Öffnungen, bereitgestellt ist, die sich spiralförmig relativ zur zentralen Drehachse (R) nach außen erstrecken, und auf jedem Schlitten ein passendes Element, das in Zusammenwirkung mit der entsprechenden Führungsbahn (42) gleitet, wie ein vorstehendes Element oder einen Stift, umfassen.

12. Einrichtung nach einem der vorstehenden Ansprüche 7-11, wobei mindestens ein, alternativ jedes, Zentrierelement (37) mit einer Walze (45) bereitgestellt ist, die um eine Achse drehbar ist, die senkrecht zur radialen Richtung liegt, in der das Zentrierelement (37) radial beweglich ist, wobei die Walze (45) eine Außenwalzenfläche (46) hat, die die Eingriffsfläche (38) des Zentrierelements (37) bildet.

13. Einrichtung nach einem der vorstehenden Ansprüche 7-12, wobei die Zentriervorrichtung (13) ausgebildet ist, jedes Zentrierelement (37) zwischen einer Eingriffsposition für einen Eingriff mit dem Kern (15) des länglichen Objekts (16), wie eines Leiters eines Spannungskabels, und einer inaktiven Position zu bewegen, wo die Eingriffsfläche (38) jedes Zentrierelements (37) dem länglichen Objekt (16), wie einem Spannungskabel, das die Umhüllung (14) enthält, erlaubt, frei durch die Zentriervorrichtung (13) hindurchzugehen.

14. System, umfassend eine Einrichtung (1) nach einem der vorstehenden Ansprüche 1-13 und einen Extruder (54), der ausgebildet ist, eine Polymerumhüllung (14) um einen Kern (15) eines länglichen Objekts (16) zu extrudieren, wie eine Isolierung (61) um einen zentralen Leiter (15) eines Hochspannungskabels" wobei die Einrichtung (1) optional stromabwärts eines Auslassendes des Extruders (54) angeordnet ist, wo das längliche Objekt (16), wie das Spannungskabel, den Extruder bei einer vorbestimmten Extrusionsgeschwindigkeit verlässt und in die Einrichtung (1) an deren Einlassende (10) eintritt.

15. Verfahren zum Produzieren länglicher Objekte (16), die einen zentralen Kern (15) und eine Polymerumhüllung (14) umfassen, die um den Kern (15) extrudiert ist, das Verfahren umfassend die folgenden Schritte:
a) Bewegen eines ersten Kerns durch einen Extruder (54) und Extrudieren der Polymerumhüllung (14) um den Kern (15) und dadurch Produzieren eines ersten länglichen Objekts,
b) Abstreifen einer Anfangslänge der Umhüllung (14) mit unzureichender Qualität und dadurch Bereitstellen einer sauberen Länge des ersten Kerns unter Verwendung einer Einrichtung (1) nach einem der Ansprüche 1-13,
c) Abtrennen der sauberen Länge des ersten Kerns von dem produzierten ersten länglichen Objekt mit Umhüllung, die um den Kern extrudiert ist,
d) Verbinden der abgetrennten sauberen Länge des ersten Kerns mit einem vorderen Ende eines zweiten Kerns mit demselben Außendurchmesser wie der erste Kern, wie durch Schweißen oder Löten, wodurch die saubere Länge einen vorderen Abschnitt auf dem zweiten Kern bildet,
e) Bewegen des zweiten Kerns durch einen Extruder und Extrudieren einer Polymerumhüllung um den Kern und dadurch Produzieren eines zweiten länglichen Objekts, auf das eine Anfangslänge der Umhüllung mit unzureichender Qualität um mindestens einen Teil der sauberen Länge des ersten Kerns extrudiert ist.

## Revendications

1. Appareil (1) pour dénuder une gaine extérieure essentiellement polymère (14) sur un noyau central essentiellement circulaire (15) d'un objet allongé (16), comme une gaine polymère, incluant éventuellement un isolant, extrudé autour d'un conducteur central d'un câble de tension, le noyau central (15) ayant une ligne centrale (17) et une surface extérieure (18), l'appareil comprenant
- un cadre (2) ayant une extrémité d'entrée d'objet (10) et une extrémité de sortie opposée (11) et, comme vu dans une direction allant de l'extrémité d'entrée de câble vers l'extrémité de sortie, un dispositif de découpe (12) configuré pour dénuder la gaine (14) depuis le noyau (15) et un dispositif de centrage (13) configuré pour centrer l'objet allongé (16),
le dispositif de découpe (12) comprenant une table (22) pouvant tourner autour d'un axe de rotation central (R) s'étendant entre l'extrémité d'entrée d'objet (10) et l'extrémité de sortie (11) et comportant une ouverture centrale (24) permettant le passage de l'objet allongé à travers celle-ci et comportant au moins un outil de découpe (31) configuré pour dénuder la gaine (14) par découpe, le au moins, alternativement chaque, outil de découpe (31) du dispositif de découpe (12) étant un outil de fraisage, tel qu'un couteau cylindrique ou une fraise en bout,
- le dispositif de centrage (13) comprenant au moins un élément de centrage (37) étant configuré pour venir en prise avec la surface extérieure (18) du noyau (15) au moyen d'une surface de mise en contact (38) dudit élément de centrage (37) et centrer la ligne centrale (17) du noyau (15) et ainsi l'objet allongé (16) doit coïncider avec l'axe de rotation central (R) du dispositif de découpe (12).

2. Appareil selon la revendication 1, dans lequel le dispositif de découpe (12) comprend au moins un outil de découpe (31) agencé de manière à pouvoir se déplacer radialement et à être réglable par rapport à la table (22).

3. Appareil selon l'une quelconque des revendications précédentes, dans lequel le dispositif de découpe (12) comprend au moins deux outils de découpe (31) disposés dans un plan essentiellement commun s'étendant perpendiculairement à l'axe de rotation central (R) du dispositif de découpe (12), comme une paire d'outils de découpe (31) disposés de manière opposée ou trois outils de découpe agencés circonférentiellement équidistants.

4. Appareil selon l'une quelconque des revendications précédentes, dans lequel le dispositif de découpe (12) comprend un certain nombre d'outils de découpe (31) agencés de manière consécutive, tels que deux ou trois outils de découpe agencés de manière consécutive.

5. Appareil selon l'une quelconque des revendications précédentes, dans lequel le dispositif de découpe (12) comprend au moins deux outils de découpe (31) disposés dans un plan essentiellement commun dans chacun d'au moins deux, tels que trois, plans agencés à la suite s'étendant perpendiculairement à l'axe de rotation central (R) du dispositif de découpe (12).

6. Appareil selon l'une quelconque des revendications précédentes, dans lequel au moins un et de préférence chaque outil de découpe (31) du dispositif de découpe (12) est agencé sur un coulisseau (34) guidé sur une voie de guidage (35) s'étendant radialement.

7. Appareil selon l'une quelconque des revendications précédentes, dans lequel le dispositif de centrage (13) comprend au moins un élément de centrage (37) mobile et réglable radialement.

8. Appareil selon l'une quelconque des revendications précédentes, dans lequel le dispositif de centrage (13) comprend un certain nombre d'éléments de centrage (37) circonférentiellement équidistants égale et mobiles et réglables dans une direction radiale, tels que deux éléments de centrage agencés radialement de manière opposée ou trois éléments de centrage (37) circonférentiellement équidistants de 120°, agencés de préférence dans un plan commun perpendiculaire à l'axe de rotation central (R) du dispositif d'usinage/de découpe (12).

9. Appareil selon la revendication 7 ou 8, dans lequel les éléments de centrage (37) sont agencés sur des coulisseaux respectifs (39) agencés sur des coulisses s'étendant radialement (40).

10. Appareil selon l'une quelconque des revendications précédentes 7 à 9, dans lequel le dispositif de centrage (13) est pourvu de moyens pour déplacer radialement de manière synchrone et ajuster la position radiale des éléments de centrage (37).

11. Appareil selon la revendication 10, dans lequel le moyen synchrone comprend une plaque de guidage rotative (41) agencée en rotation autour d'un axe coïncidant avec l'axe de rotation central (R) du dispositif de découpe (12) et étant munie d'un certain nombre de voies de guidage en forme de spirale (42) équidistantes, tels que des rainures ou des ouvertures, s'étendant en spirale vers l'extérieur par rapport à l'axe de rotation central (R) et sur chaque coulisse un élément d'appariement coulissant en coopération avec la voie de guidage respective (42), tel qu'un élément en saillie ou une broche.

12. Appareil selon l'une quelconque des revendications précédentes 7 à 11, dans lequel au moins un, en variante chaque, élément de centrage (37) est pourvu d'un rouleau (45) pouvant tourner autour d'un axe perpendiculaire à la direction radiale dans laquelle l'élément de centrage (37) est mobile radialement, ledit rouleau (45) ayant une face de rouleau externe (46) formant la surface de mise en contact (38) de l'élément de centrage (37)

13. Appareil selon l'une quelconque des revendications précédentes 7 à 12, dans lequel le dispositif de centrage (13) est configuré pour déplacer chaque élément de centrage (37) entre une position de contact venant en contact avec le noyau (15) de l'objet allongé (16), comme un conducteur d'un câble de tension, et une position inactive où la surface de contact (38) de chaque élément de centrage (37) permet à l'objet allongé (16), tel qu'un câble de tension, incluant sa gaine (14), de passer librement à travers le dispositif de centrage (13).

14. Système comprenant un appareil (1) selon l'une quelconque des revendications précédentes 1 à 13 et une extrudeuse (54) configurée pour extruder une gaine polymère (14) autour d'un noyau (15) d'un objet allongé (16), comme un isolant (61) autour d'un conducteur central (15) d'un câble haute tension, l'appareil (1) étant éventuellement disposé en aval d'une extrémité de sortie de l'extrudeuse (54) à l'endroit où l'objet oblong (16), tel que le câble de tension, quitte l'extrudeuse à une vitesse d'extrusion prédéterminée et pénètre dans l'appareil (1) à son extrémité d'entrée (10).

15. Procédé de fabrication d'objets allongés (16) comprenant un noyau central (15) et une gaine polymère (14) extrudée autour du noyau (15), ledit procédé comprenant les étapes suivantes :
a) déplacer un premier noyau à travers une extrudeuse (54) et extruder la gaine polymère (14) autour du noyau (15) et produire ainsi un premier objet allongé,
b) dénuder une longueur de début de la gaine (14) ayant une qualité insuffisante et fournir ainsi une longueur propre du premier noyau en utilisant un appareil (1) selon l'une quelconque des revendications précédentes 1 à 13,
c) séparer la longueur nette du premier noyau du premier objet oblong fabriqué ayant une gaine extrudée autour du noyau,
d) relier la longueur nette séparée du premier noyau à une extrémité avant d'un second noyau ayant le même diamètre extérieur que le premier noyau, comme par soudage ou brasage, moyennant quoi la longueur nette forme une partie avant sur le second noyau,
e) déplacer le second noyau à travers une extrudeuse et extruder une gaine polymère autour du noyau et produire ainsi un second objet oblong sur lequel une longueur de début de la gaine ayant une qualité insuffisante est extrudée autour d'au moins une partie de la longueur nette du premier noyau.
